# EUROPÄISCHE PATENTANMELDUNG

(11) **EP 1 506 895 A1**
(43) Veröffentlichungstag der Anmeldung: **16.02.2005**
(21) Anmeldenummer: 04018828.6
(22) Anmeldetag: 09.08.2004
(51) Int. Cl.: B60R 19/00, E01F 15/14

(54) **Anpralldämpfer**

(30) Priorität: 11.08.2003 DE 10336713
(71) Anmelder: Rossmann, Michael, 82547 Eurasburg (DE)
(72) Erfinder: Rossmann, Michael, 82547 Eurasburg (DE)
(74) Vertreter: Weinmiller, Jürgen, Dipl.-Ing.

(57) **Zusammenfassung**

Die Erfindung bezieht sich auf einen Fahrzeug-Anpralldämpfer, bestehend aus mindestens zwei Absorberkörpern, die Stoßenergie parallel zu einer mittleren Stoßachse in Verformungsarbeit umwandeln.

Erfindungsgemäß bilden jeweils zwei Absorberkörper (1), von denen einer links und der andere rechts von der mittleren Stoßachse liegt, ein Paar. Die Absorberkörper jedes Paares sind so miteinander mechanisch verbunden, daß die Verformung eines Absorberkörpers durch ein anprallendes Fahrzeug alleine aufgrund dieser mechanischen Verbindung zur Verformung auch des anderen Absorberkörpers dieses Paars führt.

Dadurch werden auch Absorberkörper verformt, die bei einem Anprall außerhalb des Stoßbereichs liegen, und tragen zum Abbau der kinetischen Energie des aufprallenden Fahrzeugs bei.

Der Anpralldämpfer kann entweder an einem Fahrzeug, insbesondere am Heck eines schweren Baufahrzeugs, oder am Boden befestigt werden.

## Beschreibung

Die Erfindung betrifft einen Fahrzeug-Anpralldämpfer gemäß dem Oberbegriff des Anspruch 1. Ein solcher Fahrzeug-Anpralldämpfer ist beispielsweise aus der Patentschrift US 4 711 481 bekannt.

Fahrzeug-Anpralldämpfer zur Verkehrssicherung sind Vorrichtungen, die sich beim Anprall eines Fahrzeugs definiert verformen und dabei dessen Bewegungsenergie abbauen. Es gibt stationäre, also fest am Boden verankerte Fahrzeug-Anpralldämpfer, z.B. vor einem Fahrbahnteiler, an Enden von Schutzplanken oder an Brückenpfeilern, und mobile Fahrzeug-Anpralldämpfer, welche an schweren Fahrzeugen heckseitig zum Schutz von temporären Baustellen in der Nähe des fließenden Verkehrs angebracht sind. Solche Fahrzeug-Anpralldämpfer können Unfälle nicht verhindern, aber deren Folgen mindern.

Fahrzeug-Anpralldämpfer bestehen meist aus einer Mehrzahl von neben- und hintereinander angeordneten Absorberkörpern, die sich bei einem Anprall verformen und dabei die Bewegungsenergie umwandeln. Als wesentliches Qualitätskriterium wird eine definierte gleichmäßige Verzögerung während des ganzen Bremsvorgangs gefordert. Bei angegurteten Insassen eines Fahrzeugs sind schwere Verletzungen sehr selten, wenn die Verzögerungskräfte unter 10 g bleiben. Dieser Wert ergibt sich etwa bei einer Anprallgeschwindigkeit von 70 km/h und einer wirksamen Länge des Fahrzeug-Anpralldämpfers von 2,2 m. Die Dauer des Bremsvorgangs liegt dann bei 0,23 Sekunden.

Ein Fahrzeug-Anpralldämpfer sollte unterschiedlich schwere Fahrzeuge wirksam abbremsen können, die mit unterschiedlichen Geschwindigkeiten und aus unterschiedlichen Richtungen anprallen. Dies ist aber bei bekannten Fahrzeug-Anpralldämpfern nur möglich, wenn die Baulänge des Fahrzeug-Anpralldämpfers überdimensioniert wird. Bei mobilen Fahrzeug-Anpralldämpfern sind solche Baulängen nicht praktikabel, bei festen zumindest unschön und letztlich auch begrenzt.

Bei dem in der genannten US-Patentschrift beschriebenen Fahrzeug-Anpralldämpfer werden nur bei einem mittigen und geraden Anprall alle Absorberkörper gleichmäßig belastet und verformt, sodaß die vorberechnete Bremskraft erreicht wird. Dieser Idealfall kommt aber in der Praxis in weniger als 10% der Unfälle vor.

Bei einem außermittigen und/oder schräg gerichteten Anprall zeigt sich außer der schwächeren Bremswirkung aber noch ein weiterer, schwerwiegender Nachteil: Die nicht unmittelbar von dem Anprall betroffenen Absorberkörper behalten weitestgehend ihre Form bei, während die betroffenen Absorberkörper stark gestaucht werden. Daraus folgt, daß sich die Prallfront des Fahrzeug-Anpralldämpfers gegenüber der mittleren Stoßachse schräg stellt und zur Seite ausweicht. Das anprallende Fahrzeug erhält dadurch einen Stoß zur Seite und wird unkontrollierbar zur Seite katapultiert, gegebenenfalls in den daneben fließenden Verkehr hinein. Der Fahrzeug-Anpralldämpfer läßt sich in diesem Fall mit einer Zieh-Harmonika vergleichen, die sich zu der Seite, hin verformt, an der sie stärker zusammengedrückt wird.

Aufgabe der Erfindung ist es, einen Fahrzeug-Anpralldämpfer anzugeben, der die geschilderten Folgen eines außermittigen und/oder schrägen Anpralls verhindert.

Diese Aufgabe wird durch den Fahrzeug-Anpralldämpfer gelöst, der in Anspruch 1 definiert ist. Bezüglich von Merkmalen bevorzugter Ausführungsformen der Erfindung wird auf die Unteransprüche verwiesen.

Die Erfindung wird nun anhand der beiliegenden Zeichnungen näher erläutert, wobei für gleiche Elemente in allen Figuren gleiche Bezugszeichen verwendet werden.
Figur 1 zeigt schematisch und in Perspektive einen Fahrzeug-Anpralldämpfer gemäß der Erfindung, bestehend aus zwei Absorberkörpern.
Figur 2 zeigt vergrößert einen derartigen Absorberkörper.
Figur 3 zeigt schematisch den Fahrzeug-Anpralldämpfer gemäß Figur 1 nach einem frontalen, mittigen Anprall.
Figur 4 zeigt denselben Fahrzeug-Anpralldämpfer nach einem exzentrischen Anprall im Bereich nur eines der Absorberkörper.
Figur 5 zeigt von oben einen erfindungsgemäßen Fahrzeug-Anpralldämpfer mit mehreren Reihen von Absorberkörpern.

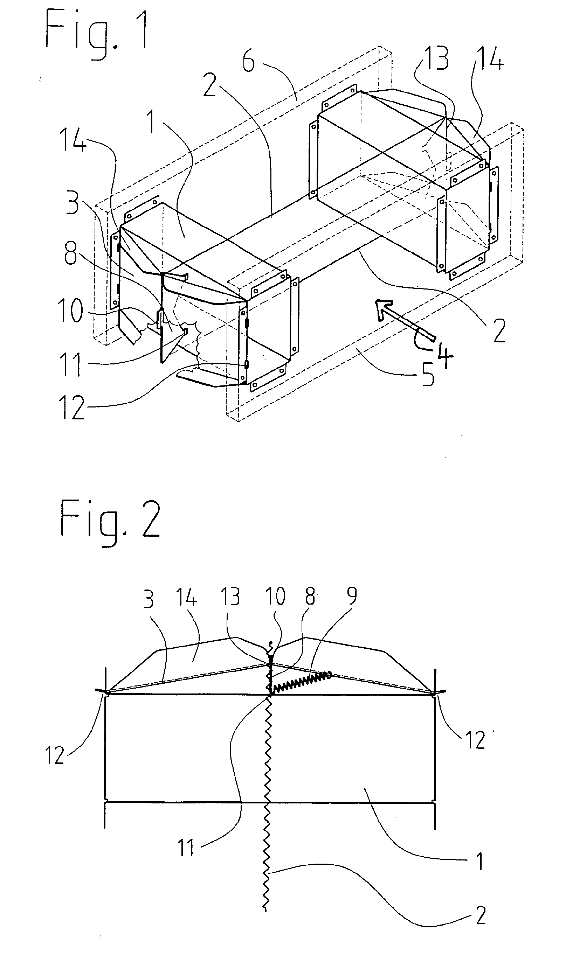

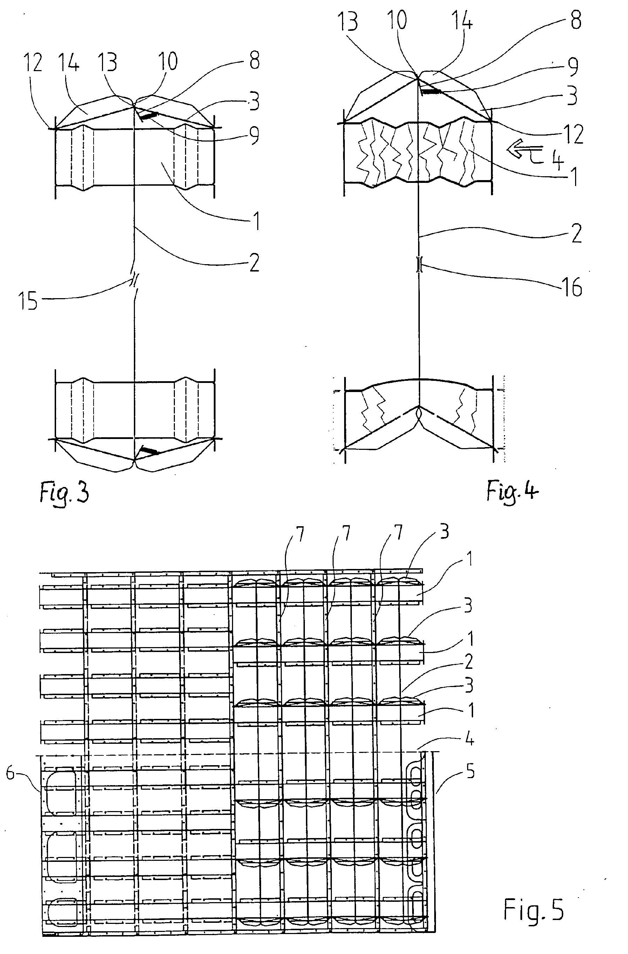

In Figur 1 sind zwei Absorberkörper 1 zu sehen, die symmetrisch zu beiden Seiten einer Mittelachse angeordnet sind und je als eine steife Metallbox ausgebildet sind. Jede Box ist stirnseitig mit einer (gestrichelt angedeuteten) Prallplatte 5 und mit einer Rückplatte 6 z.B. verschraubt oder vernietet, wobei letztere am Heck eines schweren Baufahrzeugs oder am Boden befestigt ist. Sind, wie meist üblich und in Figur 5 zu sehen, mehrere Reihen von Absorberkörpern vorgesehen, dann sind die betreffenden Absorberkörper an Zwischenplatten geschraubt oder angeschweißt. Bei einem Anprall verformen sich diese Boxen, wobei sich der Abstand zwischen Prallplatte und Rückplatte sowie zwischen den Zwischenplatten verringert. Die Verformungsarbeit bewirkt die verlangsamte Absorption der Bewegungsenergie des anprallenden Fahrzeugs. Die Form und der Aufbau des eigentlichen Absorberkörpers ist nicht Gegenstand der Erfindung, denn dem Fachmann stehen hierfür mehrere Varianten zur Verfügung, die alle beim Anprall gestaucht werden.

In der einfachsten Ausführungsform gemäß Figur 1 sind nur zwei Absorberkörper vorhanden, die symmetrisch links und rechts von der mittleren Stoßachse liegen. Jeder dieser Absorberkörper besitzt an seiner dem anderen Absorberkörper abgewandten Seite ein satteldachförmiges Blechelement 3, dessen Firstlinie 13 vertikal verläuft und dessen Außenränder Laschen 12 aufweisen, welche in entsprechende Schlitze am Rand der Box 1 hineinpassen. Entlang der Firstlinie liegt zwischen dieser und der Box ein vertikales Stützorgan 8, beispielsweise in Form einer Wand, das durch Laschen 10, 11 in Schlitzen in der Wand der Box sowie im Firstbereich des Elements 3 in Position gehalten wird. Die Dachflächen enden seitlich in hochgebogenen Rändern 14, die in der Nähe des Firsts abgeschrägt sind.

An diesen Abschrägungen wird ein Seil 2 so geführt, daß es entlang der Firstlinien der beiden Absorberkörper 1 verlaufen kann und diese zusammenspannt, wenn die Seilenden unter Spannung miteinander über einen Überlastauslöser 15 verbunden werden.

Figur 2 zeigt schematisch von oben die erfindungsgemäße Anordnung einer Box 1 mit ihrem satteldachförmigen Element 3 und dem Seil 2. Man erkennt weiter eine Feder 9, die den First des Elements 3 und das Stützorgan 8 wieder in die Ausgangslage zurückzieht, wenn ein zentraler Anprall erfolgte, dessen geringe Heftigkeit nicht zur Auslösung des Auslösers 15 führte.

Figur 3 zeigt die durch einen starken mittigen Anprall hervorgerufene Verformung der beiden Absorberkörper gemäß Pfeil 4 in Fig. 1. Die Anprallkräfte verlaufen in der Zeichenebene waagrecht und wirken gleichmäßig auf beide Absorberkörper. Dabei werden also beide Absorberkörper im gleichen Maß gestaucht, sodaß die beiden Firstlinien sich von ihren Absorberkörpern wegbewegen. Die Spannung des Seils 2 steigt deutlich und führt zum Ansprechen der Überlastsicherung 15. Das Seil hat nun keinen Einfluß mehr auf den weiteren Verlauf der Verformung.

Anders ist der Verlauf bei einem Anprall nur an einer Seite oder bei einem schräg bezüglich der Mittellinie wirksamen Stoß, wie Pfeil 4 in Figur 4 zeigt. Ohne das Seil würde nur die Box an dieser Seite gestaucht, die Prallplatte 5 würde einseitig nachgeben und das anprallende Fahrzeug zur Seite stoßen, möglicherweise in den daneben fließenden Verkehr hinein. Durch die Erfindung wird dagegen, wie Figur 4 zeigt, auch der unten liegende Absorberkörper verformt, da aufgrund der gestiegenen Zugkraft des Seils das Stützorgan 8 mit einer vorzugsweise scharfen Kante die bekanntlich am leichtesten verformbare Breitseite der Box eindrückt. So trägt einerseits auch die Verformungsarbeit an der eigentlich am primären Anprall unbeteiligten Box zur Umwandlung der Anprallenergie bei und andrerseits wird die Schrägstellung der Prallplatte 5 verringert oder ganz verhindert. Das Fahrzeug wird also nicht zur Seite geschleudert.

Der Auslösewert des Überlast-Auslösers 15 wird so gewählt, daß er nur bei einem mittigen Anprall einer vorbestimmten Stärke, wie oben anhand von Figur 3 geschildert, anspricht.

Die Erfindung ist nicht auf das dargestellte Ausführungsbeispiel beschränkt. So kann man anstatt eines Stahlseils andere mechanische Mittel verwenden, wie zum Beispiel eine bei einer bestimmten Last sich lösende Klammer zwischen den beiden Elementen 8.

In der Praxis verwendet man bevorzugt eine Vielzahl von Absorberkörpern. Falls mehrere Absorberkörper in einer Reihe liegen, verläuft je ein Spannseil stets nur zwischen zwei Absorberkörpern. Dabei können die Absorberkörper jedes Paars symmetrisch zur Mittellinie des Anpralldämpfers liegen. Die einzelnen Paare einer Reihe von Absorberkörpern sind dann alle unterschiedlich weit entfernt und das Seil von zwei außen liegenden Absorberkörpern umschlingt alle Seile von Paaren von Absorberkörpern, die näher bei der Mittellinie liegen.

In einer bevorzugten Ausführungsform ist der Abstand der Absorberkörper für alle Paare gleich groß und beträgt etwa die Hälfte der Breite des Anpralldämpfers. Dies vereinfacht den Aufbau und erhöht die Wirkung besonders bei einem zentralen Anprall, da dann praktisch alle Absorberkörper einer Reihe bis zum Rand verformt werden.

Falls mehrere Reihen von Absorberkörper einen Fahrzeug-Anpralldämpfer bilden, brauchen nicht unbedingt in allen Reihen alle Paare von Absorberkörpern über ein Seil zusammengespannt werden. Vielfach genügt es, nur die in einer Reihe außen liegenden oder nur die in den der Anprallplatte nächstliegenden Reihen enthaltenen Absorberkörper erfindungsgemäß mit dem Element 8 sowie dem Seil 2 auszurüsten.

Es ist dem Fachmann auch klar, daß das satteldachförmige Element 3 auch anders als mit Laschen in Schlitzen befestigt werden kann. Als Material für dieses Element und das Stützorgan 8 kommen insbesondere Metallbleche, zum Beispiel aus Aluminium, in Frage.

Bekanntlich fangen Fahrzeuge, die mit Anpralldämpfern kollidieren, schnell Feuer, wenn beim Anprall der Treibstofftank zerstört wird. Passiert dies in einem Tunnel, dann geraten nicht nur die Insassen des betroffenen Fahrzeugs, sondern wegen der Rauchentwicklung auch zahlreiche weitere Verkehrsteilnehmer in Lebensgefahr. Für diesen Fall können die erfindungsgemäßen Anpralldämpfer als "Sofort-Feuerwehr" wirken, indem sie ein Löschmittel in ihren Absorberkörpern enthalten, das automatisch bei einer heftigen Stoßeinwirkung freigesetzt wird, sobald diese Absorberkörper verformt werden. Bei der zweidimensionalen Anordnung von Absorberkörpern gemäß Figur 5 gilt dies besonders für die der Prallplatte 5 benachbarten Absorberkörper. Damit das flüssige oder pulverförmige Löschmittel möglichst gezielt den Brandherd erreicht, sollte der das Löschmittel enthaltende Raum in Anpralldämpfern mindestens eine Soll-Öffnung besitzen, die sich bei einem Anprall bevorzugt öffnet und so angeordnet ist, daß das Löschmittel in Richtung zum anprallenden Gegenstand ausgestoßen wird.

Die Erfindung ist nicht auf die im Einzelnen beschriebenen Ausführungsbeispiele beschränkt, sondern umfaßt alle Varianten, die von der Definition des Hauptanspruchs umfaßt werden.

### Liste der Bezugszeichen

- 1: Absorberkörper (Box)
- 2: Zugorgan (Seil)
- 3: satteldachförmiges Element
- 4: Stoßachse
- 5: Prallplatte
- 6: Rückplatte
- 7: Zwischenplatte
- 8: Stützorgan (Stützwand)
- 9: Feder
- 10, 11,: 12 Laschen
- 13: Firstlinie
- 14: Rand
- 15: Überlastauslöser

## Patentansprüche

1. Fahrzeug-Anpralldämpfer, bestehend aus mindestens zwei Absorberkörpern, die Stoßenergie parallel zu einer mittleren Stoßachse in Verformungsarbeit umwandeln, **dadurch gekennzeichnet, daß** jeweils zwei Absorberkörper (1), von denen einer links und der andere rechts von der mittleren Stoßachse liegt, ein Paar bilden, und daß die Absorberkörper jedes Paares so miteinander mechanisch verbunden sind, daß die Verformung eines Absorberkörpers durch ein anprallendes Fahrzeug alleine aufgrund dieser mechanischen Verbindung zur Verformung auch des anderen Absorberkörpers dieses Paars führt.

2. Fahrzeug-Anpralldämpfer nach Anspruch 1, **dadurch gekennzeichnet, daß** die Absorberkörper mindestens eines Paars in gleichen Abständen von der mittleren Stoßachse des Anpralldämpfers angebracht sind.

3. Fahrzeug-Anpralldämpfer nach Anspruch 1 oder 2, **dadurch gekennzeichnet, daß** die Absorberkörper (1) mindestens eines Paars in unterschiedlichen Abständen von der mittleren Stoßachse des Anpralldämpfers angebracht sind.

4. Fahrzeug-Anpralldämpfer nach Anspruch 3, **dadurch gekennzeichnet, daß** der Abstand zwischen den Absorberkörpern eines Paars für alle Paare einer Reihe von Absorberkörpern derselbe ist und vorzugsweise der halben Breite des Anpralldämpfers entspricht.

5. Fahrzeug-Anpralldämpfer mit mehreren Reihen von Absorberkörpern (1) hintereinander, **dadurch gekennzeichnet, daß** zumindest Absorberkörper in den der Prallplatte (5) benachbarten Reihen wie in den vorstehenden Ansprüchen angegeben miteinander mechanisch verbunden sind.

6. Fahrzeuganpralldämpfer nach einem der vorstehenden Ansprüche, **dadurch gekennzeichnet, daß** die Absorberkörper (1) eines Paars an ihrer einander abgewandten Seite mit je einem satteldachförmigen Element (3) fest verbunden sind, dessen Firstlinie (13) vertikal verläuft und sich über ein Stützorgan (8) auf dem zugeordneten Absorberkörper (1) abstützt, und daß ein die mechanische Verbindung bewirkendes Zugorgan (2) die Firstlinien (13) der beiden satteldachförmigen Elemente (3) des Paars von Absorberkörpern (1) zusammenzieht.

7. Fahrzeug-Anpralldämpfer nach Anspruch 6, **dadurch gekennzeichnet, daß** jedes Zugorgan (2) mit einem Überlastauslöser (15) versehen ist.

8. Fahrzeug-Anpralldämpfer nach einem der Ansprüche 6 und 7, **dadurch gekennzeichnet, daß** das Stützorgan (8) eine Stützwand ist, die sich entlang der Firstlinie erstreckt.

9. Fahrzeug-Anpralldämpfer nach Anspruch 8, **dadurch gekennzeichnet, daß** die Stützwand (8) im Kontaktbereich mit dem Absorberkörper (1) einen schmalen Grat besitzt.

10. Fahrzeug-Anpralldämpfer nach einem der Ansprüche 6 bis 9, **dadurch gekennzeichnet, daß** das Zugorgan (2) ein Seil ist, das entlang der Firstlinien über die beiden satteldachförmigen Elemente eines Paars von Absorberkörpern (1) verläuft.

11. Fahrzeug-Anpralldämpfer nach einem der vorstehenden Ansprüche, **dadurch gekennzeichnet, daß** sich zumindest in einem Teil der Absorberkörper ein Löschmittel befindet, das durch die Stoßeinwirkung freigesetzt wird.

12. Fahrzeug-Anpralldämpfer nach Anspruch 5 und 11, **dadurch gekennzeichnet, daß** zumindest die Absorberkörper, die der Prallplatte (5) nahe liegen, das Löschmittel enthalten.

13. Fahrzeug-Anpralldämpfer nach einem der Ansprüche 11 und 12, **dadurch gekennzeichnet, daß** die das Löschmittel enthaltenden Räume in den Absorberkörpern mindestens eine Soll-Öffnung besitzen, die sich bei einem Anprall bevorzugt öffnet und so angeordnet ist, daß das Löschmittel in Richtung zum anprallenden Gegenstand ausgestoßen wird.
